# EUROPEAN PATENT APPLICATION

(11) **EP 3 611 879 A1**
(43) Date of publication of application: **19.02.2020**
(21) Application number: 18899030.3
(22) Date of filing: 12.07.2018
(51) Int. Cl.: H04L 12/26, H04L 12/14

(54) **DATA TRAFFIC STATISTICS METHOD AND DEVICE BASED ON BLOCK CHAIN**

(30) Priority: 04.06.2018 CN 201810565582
(71) Applicant: Wangsu Science & Technology Co., Ltd., Shanghai 200030 (CN)
(72) Inventor: The designation of the inventor has not yet been filed
(74) Representative: Hanna Moore + Curley
(86) International application number: PCT/CN2018/095432
(87) International publication number: WO 2019/232890

(57) **Abstract**

A method for blockchain-based data traffic calculation includes: when data traffic generated between the first node and the second node in a CDN system is detected, recording the data traffic generated by the first node or the second node by triggering a transfer between the first account corresponding to the first node and the second account corresponding to the second node; acquiring account information of the first account and/or the second account, where the account information includes at least an account balance and/or a transfer record; and calculating traffic information of the first node and/or the second node based on the account information of the first account and/or the second account.

## Description

### FIELD OF DISCLOSURE

The present disclosure generally relates to the field of traffic calculation technology and, more particularly, relates to a method and device for blockchain-based data traffic calculation.

### BACKGROUND

With the continuous advancement of Internet technology, the CDN (Content Delivery Network) service has also developed rapidly. When a CDN service provider provides the CDN service to a client, the data traffic generated by the client in using the CDN service may be recorded and calculated, and then the CDN service provider may charge the client based on the calculated traffic information.

The CDN server in a CDN system may obtain information relating to the data traffic generated by a client based on the recorded request log of the client or the traffic monitoring interface of the CDN server. Afterwards, the CDN server may push the generated information relating to the data traffic to a traffic billing cluster in the CDN system. Thereafter, the traffic billing cluster may calculate the traffic information of the client based on the above information relating to the data traffic, and then obtain the resulting charge for the client.

In the process of implementing the present disclosure, applicants have found that the existing technologies have at least the following problems:
When a CDN server pushes the related information of the obtained data traffic to the traffic billing cluster, the data loss problem is easy to occur. This leads the billing data calculated by the traffic billing cluster based on the related incomplete data traffic information to have a low accuracy. In addition, if the traffic billing cluster fails, the data loss problem is also prone to occur, which takes a great deal to recover the lost data, and some data cannot even be recovered. Moreover, due to the large variety of the information related to the data traffic, the amount of related data is generally large, which leads the traffic billing cluster to undergo a large amount of calculation to obtain the calculated traffic information for the client, and thus the traffic information calculation efficiency is low.

### BRIEF SUMMARY OF THE DISCLOSURE

To solve the problems in the existing technologies, the embodiments of the present disclosure provide a method and device for blockchain-based data traffic calculation. The technical solutions are as follows:
In one aspect, a method for blockchain-based data traffic calculation is provided. The method is applied to a CDN system that includes at least one first node and one second node, where a blockchain wallet account corresponding to the first node is a first account, and a blockchain wallet account corresponding to the second node is a second account, and the method includes:
when data traffic generated between the first node and the second node is detected, recording the data traffic generated by the first node or the second node by triggering a transfer between the first account and the second account;
acquiring account information of the first account and/or the second account, where the account information includes at least an account balance and/or a transfer record; and
calculating traffic information of the first node and/or the second node based on the account information of the first account and/or the second account.

Further, recording the data traffic generated by the first node or the second node by triggering a transfer between the first account and the second account includes:
converting the data traffic generated by the first node or the second node into a transfer amount based on a preset ratio, and triggering the transfer between the first account and the second account to be conducted according to the transfer amount.

Further, recording the data traffic generated by the first node or the second node by triggering a transfer between the first account and the second account includes:
after each preset time period, triggering a transfer between the first account and the second account to record data traffic generated by the first node or the second node in the latest preset time period.

Further, recording the data traffic generated by the first node or the second node by triggering a transfer between the first account and the second account includes:
when accumulated data traffic generated by the first node or the second node reaches a preset threshold, triggering a transfer between the first account and the second account to record accumulated data traffic currently generated by the first node or the second node, and clearing the currently generated accumulated data traffic.

Further calculating the traffic information of the first node and/or the second node based on the account information of the first account and/or the second account includes:
converting the account balance of the first account or the second account into certain data traffic based on the preset ratio, and calculating the traffic information of the first node and/or the second node based on the converted data traffic; or
calculating data traffic corresponding to the transfer record of the first account or the second account based on the preset ratio, and calculating the traffic information of the first node and/or the second node based on the calculated data traffic.

In another aspect, a device for blockchain-based data traffic calculation is provided. The device is applied to a CDN system that includes at least one first node and one second node, where a blockchain wallet account corresponding to the first node is a first account, and a blockchain wallet account corresponding to the second node is a second account, and the device includes:
a triggering module that is configured to, when data traffic generated between the first node and the second node is detected, record the data traffic generated by the first node or the second node by triggering a transfer between the first account and the second account;
an acquisition module that is configured to acquire account information of the first account and/or the second account, where the account information includes at least an account balance and/or a transfer record; and
a calculation module that is configured to calculate traffic information of the first node and/or the second node based on the account information of the first account and/or the second account.

Further, the triggering module is also configured to:
convert the data traffic generated by the first node or the second node into a transfer amount based on a preset ratio, and trigger the transfer between the first account and the second account to be conducted according to the transfer amount.

Further, the triggering module is also configured to:
after each preset time period, trigger a transfer between the first account and the second account to record data traffic generated by the first node or the second node in the latest preset time period.

Further, the triggering module is also configured to:
when accumulated data traffic generated by the first node or the second node reaches a preset threshold, trigger a transfer between the first account and the second account to record accumulated data traffic currently generated by the first node or the second node, and clear the currently generated accumulated data traffic.

Further, the calculation module is also configured to:
convert the account balance of the first account or the second account into certain data traffic based on the preset ratio, and calculate the traffic information of the first node and/or the second node based on the converted data traffic; or
calculate data traffic corresponding to the transfer record of the first account or the second account based on the preset ratio, and calculate the traffic information of the first node and/or the second node based on the calculated data traffic.

In another aspect, a server is provided. The server includes a processor and a memory, where the memory stores at least one instruction, at least one program, a code set, or an instruction set. The at least one instruction, at least one program, a code set, or an instruction set is loaded and executed by the processor to implement the above-described methods for blockchain-based data traffic calculation.

In another aspect, a computer-readable storage medium is provided. The computer-readable storage medium stores at least one instruction, at least one program, a code set, or an instruction set. The at least one instruction, at least one program, a code set, or an instruction set is loaded and executed by the processor to implement the above-described methods for blockchain-based data traffic calculation.

The beneficial effects brought by the technical solutions provided by the embodiments of the present disclosure include:
In the embodiments of the present disclosure, through recording the data traffic generated between the first node and the second node of the CDN system in the form of transfer between the blockchain wallet accounts corresponding to each node, data traffic generated by each node may be stored in the blockchain. By utilizing the safety and reliability of the blockchain, the data loss problem is solved. At the same time, through merely the simple filtering and calculation, the traffic information of each node may be calculated by utilizing the account information of the blockchain wallet account corresponding to each node, which greatly improves the data traffic calculation efficiency.

### BRIEF DESCRIPTION OF THE DRAWINGS

To make the technical solutions in the embodiments of the present disclosure clearer, a brief introduction of the accompanying drawings consistent with descriptions of the embodiments will be provided hereinafter. It is to be understood that the following described drawings are merely some embodiments of the present disclosure. Based on the accompanying drawings and without creative efforts, persons of ordinary skill in the art may derive other drawings.
FIG. 1 is a schematic diagram of a network architecture according to some embodiments of the present disclosure;
FIG. 2 is a flowchart of a method for blockchain-based data traffic calculation according to some embodiments of the present disclosure;
FIG. 3 is a schematic structural diagram of a device for blockchain-based data traffic calculation according to some embodiments of the present disclosure; and
FIG. 4 is a schematic structural diagram of a server according to some embodiments of the present disclosure.

### DETAILED DESCRIPTION

To make the objective, technical solutions, and advantages of the present disclosure clearer, the present disclosure will be made in detail hereinafter with reference to the accompanying drawings.

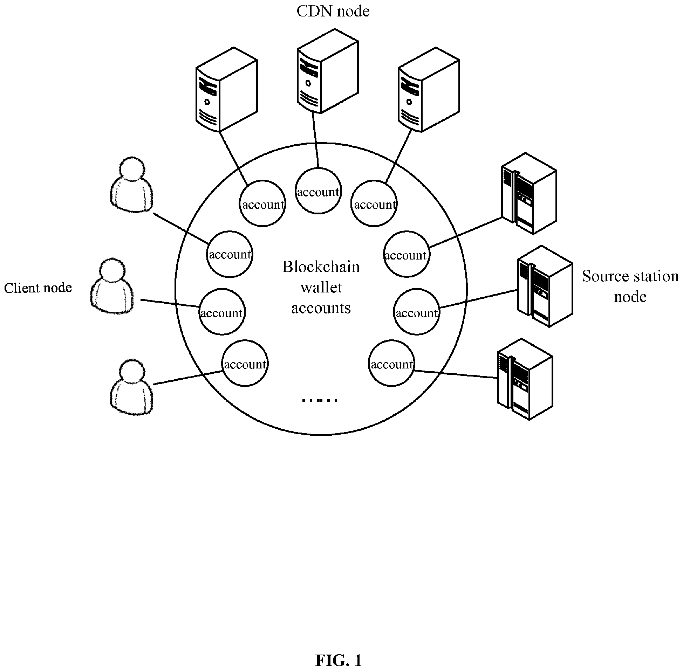

The embodiments of the present disclosure provide a method for blockchain-based data traffic calculation. The execution entity of the method may be a data traffic calculation device in a CDN system. The data traffic calculation device may be a single ordinary server for calculating data traffic, or a cluster consisting of multiple ordinary servers, or a CDN server for content distribution. The data traffic calculation device may separately create a blockchain wallet account for each node in the CDN system, and calculate data traffic generated by each node based on the blockchain wallet account. The CDN system may include at least one first node and one second node, where the blockchain wallet account corresponding to the first node may be recorded as the first account, and the blockchain wallet account corresponding to the second node may be recorded as the second account. The first node and the second node may respectively be a client node, a source station node, or a CDN node. For example, the first node is a source station node or a client node, and the second node is a CDN node, or the first node is a client node, and the second node is a source station node, or both the first node and the second node are CDN nodes. Here, the client node may identify a client that uses the CDN service, the source station node may denote the source station server for the client, and the CDN node may denote a CDN server that provides the CDN service. A specific network architecture may be as shown in FIG. 1. Each of the foregoing servers may include a processor, a memory, and a transceiver. The processor may be configured to perform blockchain-based data traffic calculation in the following process, the memory may be configured to store data required and generated in the following process, and the transceiver may be configured to receive and transmit relevant data in the following process. In the disclosed embodiments, the first node is illustrated as a source station node or a client node, while the second node is illustrated as a CDN node. Other situations are similar to these embodiments, and will not be described again.

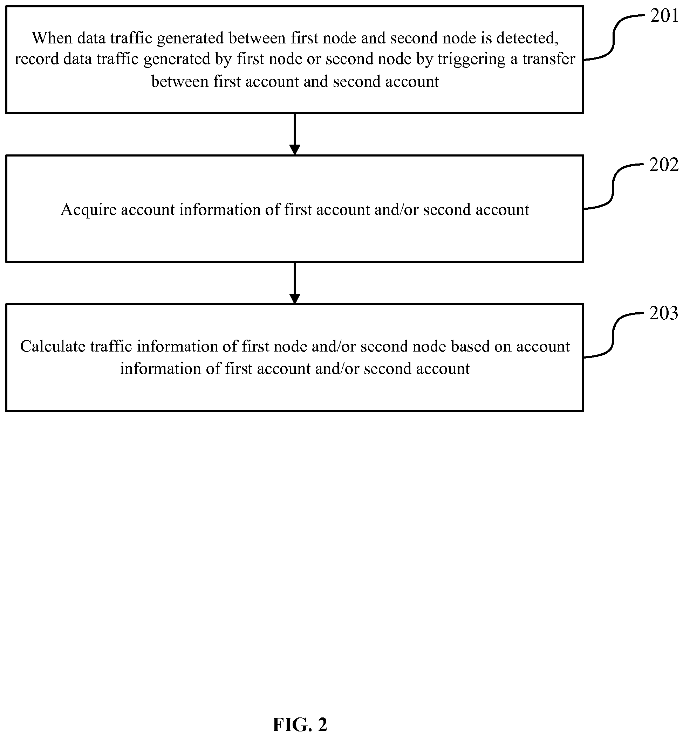

The flowchart shown in FIG. 2 will be described in detail hereinafter in conjunction with specific implementations, and the content may be as follows:
Step 201: when data traffic generated between the first node and the second node is detected, record the data traffic generated by the first node or the second node by triggering a transfer between the first account and the second account.

In one implementation, when a customer wants to access a picture, a video, or another resource in a client's website, the customer may enter the address of the website, for example, www.abcdef.com, in a browser running on a terminal (e.g., a smartphone, a tablet). In this way, the terminal may send a resource acquisition request to the CDN server serving the terminal. Afterwards, the CDN server may look up the foregoing resource in the local cache. If the resource is found in the local cache, the CDN server may return the locally cached resource to the terminal. If the resource is not found in the local cache, the CDN server may acquire the foregoing resource from a source station server correspond to the client's website, and then forward the obtained resource to the terminal.

In the above content distribution process, a data traffic calculation device may detect data traffic generated between the client node corresponding to the client or the source station node corresponding to the source station server of the client (i.e., the first node) and the CDN node corresponding to the CDN server (i.e. the second node). Specifically, in the foregoing process that the CDN server returns the locally cached resource to the terminal, the data traffic calculation device may detect a generation of data traffic between the client node corresponding to the client and the CDN node corresponding to the CDN server. In the foregoing process that the CDN server acquires the resource from the source station server corresponding to the website of the client, the data traffic calculation device may detect a generation of data traffic between the source station node corresponding to the source station server and the CDN node corresponding to the CDN server. It should be noted that the data traffic generated between the client node or the source station node and the CDN node may be the data traffic generated by the client node or the source station node, or may be the data traffic generated by the CDN node. Here, the data traffic generated by the client node may be the amount of data of the above resource received by the terminal; the data traffic generated by the source station node may be the amount of data of the above resource transmitted by the source station server to the CDN server; and the data traffic generated by the CDN node may be the amount of data of the above resource forwarded by the CDN server to the terminal, or the amount of data of the above resource acquired by the CDN server from the source station server.

In this way, after detecting a generation of data traffic between the first node and the second node, the data traffic calculation device may record the data traffic generated by the first node or the second node by triggering a transfer between the blockchain wallet account corresponding to the first node (i.e., the first account) and the blockchain wallet account corresponding to the second node (i.e., the second account). This allows the data traffic generated by the first node or the second node to be saved on the blockchain. By exploiting the security and reliability of the blockchain, the data loss problem may be solved.

Optionally, the generated data traffic may be recorded in the form of a transfer amount. Correspondingly, a partial process of Step 201 may be as follows: converting the data traffic generated by the first node or the second node into a transfer amount based on a preset ratio, and triggering the transfer between the first account and the second account to be conducted according to the transfer amount.

In one implementation, after detecting that data traffic is generated between the first node and the second node, the data traffic calculation device may convert the generated data traffic into a transfer amount according to a preset ratio, for example, a ratio of 1000:1, 2000:1, that is, 1000 MB corresponds to 1 yuan, 2000 MB corresponds to 1 yuan. The data traffic calculation device may then trigger the first account and the second account to conduct a transfer according to the converted transfer amount. For example, when the data traffic calculation device detects that an amount of 2000 MB is generated between the first node and the second node, the data traffic of 2000 MB may be converted into a transfer amount of 2 yuan according to the preset ratio of 1000:1, and then the data traffic calculation device may trigger a transfer to be conducted between the first account and the second account according to the transfer amount of 2 yuan.

Specifically, the transfer between the accounts may be conducted in a prepaid mode or a postpaid mode. Taking the client node as the first node and the CDN node as the second node as an example: if the prepaid mode is adopted, the client may pre-deposit a certain amount of money in the blockchain wallet account corresponding to the client node, for example, 1000 yuan or 2000 yuan. When data traffic is generated between the client node and the CDN node, the data traffic calculation device may trigger the blockchain wallet account corresponding to the client node (i.e., the first account) to transfer a transfer amount corresponding to the generated data traffic to the blockchain wallet account corresponding to the CDN node (i.e., the second account). If the post-paid mode is adopted, when data traffic is generated between the client node and the CDN node, the data traffic calculation device may trigger the blockchain wallet account corresponding to the CDN node (i.e., the second account) to transfer a transfer amount corresponding to the generated data traffic to the blockchain wallet account corresponding to the client node (i.e., the first account). The client may then pay back according to the amount in the blockchain wallet account corresponding to the client node.

Optionally, the transfer between the first account and the second account may be triggered periodically. Correspondingly, a partial process of Step 201 may be as follows: triggering a transfer between the first account and the second account after each preset time period, to record data traffic generated by the first node or the second node in the latest preset time period.

In one implementation, the data traffic calculation device may trigger a transfer between the first account and the second account after each preset time period, for example, every 10 minutes or 20 minutes. Data traffic generated by the first node or the second node during the latest preset time period may then be recorded by means of a transfer conducted between the first account and the second account. Taking the preset time period of 10 minutes as an example, assuming that the last triggered transfer was at 12:10 on a certain day, the data traffic calculation device may trigger a transfer to be conducted between the first account and the second account at 12:20 of the day, to record the data traffic generated by the first node or the second node between 12:10 and 12:20 on that day. In this way, the data traffic calculation device does not need to trigger a transfer between the first account and the second account in real time, thereby reducing the system resource occupancy rate of the data traffic calculation device.

Optionally, the transfer between the first account and the second account may be triggered according to a preset threshold. Correspondingly, a partial process of Step 201 may be as follows: when the accumulated data traffic generated by the first node or the second node reaches the preset threshold, the transfer between the first account and the second account is triggered to record the accumulated data traffic currently generated by the first node or the second node, and the accumulated data traffic currently generated is then cleared to zero.

In one implementation, the data traffic calculation device may accumulate data traffic generated by the first node or the second node, and determine whether the currently generated data traffic accumulates to a preset threshold, for example, 500 MB or 1000 MB. If the preset threshold is reached, the data traffic calculation device may trigger a transfer between the first account and the second account to record the accumulated data traffic currently generated by the first node or the second node. At the same time, the data traffic calculation device may clear the accumulated data traffic currently generated to zero, so that the data traffic generated by the first node or the second node may be re-accumulated. In this way, the data traffic calculation device does not need to trigger the transfer to be conducted between the first account and the second account in real time, thereby reducing the system resource occupancy rate of the data traffic calculation device.

Step 202: acquire account information of the first account and/or the second account.

The account information may include at least the current balance and/or the transfer record(s). The current balance may be a total amount displayed in a blockchain wallet account, for example, 10,000 yuan or 5,000 yuan, and the transfer record(s) may include transaction information between the blockchain wallet account and other blockchain wallet account(s). The transaction information may include information such as the transaction entities, transaction time, transaction amount(s), etc. For example, a blockchain wallet account A transfers 100 yuan to a blockchain wallet account B at 18:10:10 on January 1, 2018, the blockchain wallet account A receives 100 yuan from the blockchain wallet account B at 20:05:10 on January 2, 2018, etc.

In one implementation, the data traffic calculation device may acquire the account information of the first account and/or the second account in real time after a transfer between the first account and the second account is completed, or acquire the account information of the first account and/or the second account after each preset time period, such as every 1 hour or every half an hour. Specifically, the data traffic calculation device may acquire the account information, such as the account balance, the transfer record(s), etc., of the first account and/or the second account by logging in the first account or the second account. At the same time, since the transaction information between each blockchain wallet account is also recorded in the blockchain, the data traffic calculation device may also obtain the account information of the first account and/or the second account from the blockchain.

Step 203: calculate the traffic information of the first node and/or the second node based on the account information of the first account and/or the second account.

In one implementation, after obtaining the account information of the first account and/or the second account, the data traffic calculation device may perform a calculation on the traffic information of the first node and/or the second node. That is, the data traffic calculation device may calculate the traffic information of the first node based on the account information of the first account, the traffic information of the second node based on the account information of the second account, and the traffic information of the first node and the traffic information of the second node based on the account information of the first account and the second account.

Optionally, the traffic information of a node may be calculated based on the account balance or the transfer record(s). Correspondingly, the process of Step 203 may be as follows: converting the account balance of the first account or the second account into data traffic based on the preset ratio, and calculating the traffic information of the first node and/or the second node based on the converted data traffic; or calculating data traffic corresponding to the transfer record(s) of the first account or the second account based on the preset ratio, and calculating the traffic information of the first node and/or the second node based on the calculated data traffic.

In one implementation, after the data traffic calculation device obtains the account information of the first account and/or the second account, on the one hand, the data traffic calculation device may convert the account balance in the account information of the first account and/or the second account to the data traffic according to the foregoing preset ratio, and then calculate the traffic information of the first node or the second node, such as the total data traffic of the client node, the back-to-source data traffic of the source station node, and the total data traffic of the CDN node. For example, in the post-paid mode, through converting the account balance in the blockchain wallet account corresponding to the client node according to the preset ratio, the data traffic calculation device may obtain the total data traffic generated by the client. The back-to-source data traffic generated by the source station node and the total data traffic generated by the CDN node may be similarly obtained.

On the other hand, the data traffic calculation device may calculate the data traffic corresponding to the transfer record(s) of the first account or the second account based on the preset ratio, and then calculate the traffic information of the first node or the second node, such as the regional data traffic of the client node, the regional back-to-source data traffic of the source station node, and the total data traffic of a specific client or the total data traffic of a specific source station of the CDN node, based on the calculated data traffic. For example, the data traffic calculation device may calculate the data traffic corresponding to each transfer record of the client node, and then filter and calculate the data traffic corresponding to the transfer record(s) between the client node and a certain CDN node, to obtain the regional data traffic of the client node at that CDN node. The regional back-to-source data traffic of the source station node, the total data traffic of a specific client or the total data traffic of a specific source station of the CDN node may be similarly obtained. In this way, after simple calculation and filtering, the account information of the first account or the second account may be used to calculate the traffic information of the client node, the source station node, or the second node, which greatly improves the data traffic calculation efficiency.

In the embodiments of the present disclosure, through recording the data traffic generated between the first node and the second node of the CDN system in the form of transfer between the blockchain wallet accounts corresponding to each node, data traffic generated by each node may be stored in the blockchain. By utilizing the safety and reliability of the blockchain, the data loss problem is solved. At the same time, through merely the simple filtering and calculation, the traffic information of each node may be calculated by utilizing the account information of the blockchain wallet account corresponding to each node, which greatly improves the data traffic calculation efficiency.

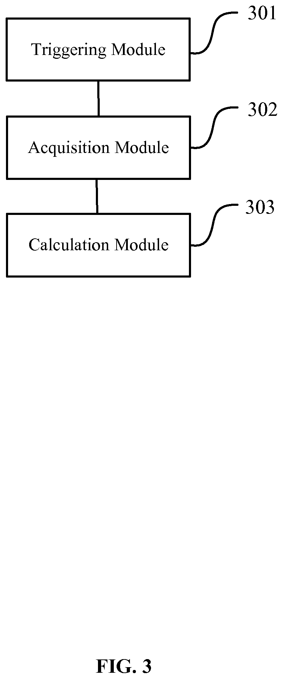

Based on the similar technical concept, the embodiments of the present disclosure further provide a device for blockchain-based data traffic calculation. As shown in FIG. 3, the device is applied to a CDN system, where the CDN system includes at least one first node and one second node, a blockchain wallet account corresponding to the first node is a first account, and a blockchain wallet account corresponding to the second node is a second account, and the device includes:
a triggering module 301 that is configured to, when data traffic generated between the first node and the second node is detected, record the data traffic generated by the first node or the second node by triggering a transfer between the first account and the second account;
an acquisition module 302 that is configured to acquire account information of the first account and/or the second account, where the account information includes at least an account balance and/or a transfer record; and
a calculation module 303 that is configured to calculate traffic information of the first node and/or the second node based on the account information of the first account and/or the second account.

Optionally, the triggering module 301 is further configured to:
convert the data traffic generated by the first node or the second node into a transfer amount based on a preset ratio, and trigger the transfer between the first account and the second account to be conducted according to the transfer amount.

Optionally, the triggering module 301 is further configured to:
after each preset time period, trigger a transfer between the first account and the second account to record data traffic generated by the first node or the second node in the latest preset time period.

Optionally, the triggering module 301 is further configured to:
when accumulated data traffic generated by the first node or the second node reaches a preset threshold, trigger a transfer between the first account and the second account to record accumulated data traffic currently generated by the first node or the second node, and clear the currently generated accumulated data traffic.

Optionally, the calculation module 303 is further configured to:
convert the account balance of the first account or the second account into certain data traffic based on the preset ratio, and calculate the traffic information of the first node and/or the second node based on the converted data traffic; or
calculate data traffic corresponding to the transfer record of the first account or the second account based on the preset ratio, and calculate the traffic information of the first node and/or the second node based on the calculated data traffic.

It should be noted that, in calculating the data traffic, the device for blockchain-based data traffic calculation provided by the above embodiments is illustrated merely by way of example of the foregoing division of the functional modules. In real applications, the foregoing functions may be allocated into and implemented by different functional modules according to the needs. That is, the internal structure of the device may be divided into different functional modules to complete all or part of the above-described functions. In addition, the devices for blockchain-based data traffic calculation and the methods for blockchain-based data traffic calculation provided by the foregoing embodiments are attributed to the same concept. Accordingly, for the specific implementation process of the devices provided by the embodiments, the embodiments for the methods may be referred to, details of which will not be described herein again.

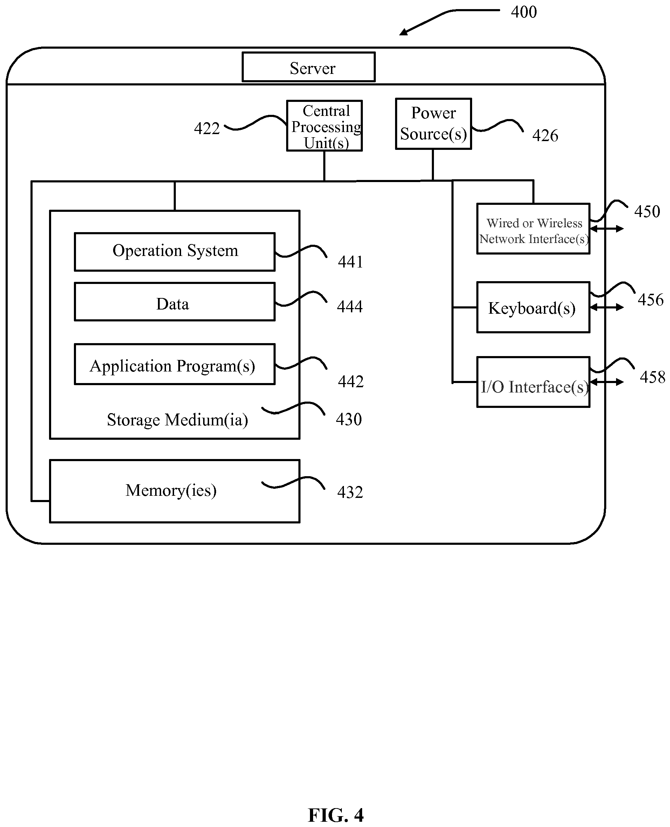

FIG. 4 is a schematic structural diagram of a server according to some embodiments of the present disclosure. The server 400 may vary considerably depending on the configuration or performance, and may include one or more central processing units 422 (e.g., one or more processors) and memories 432, one or more storage media 430 (e.g., one or one mass storage devices) for storing application programs 442 or data 444. Here, the memories 432 and the storage media 430 may be a volatile storage device or a non-volatile storage device. The programs stored on the storage media 430 may include one or more modules (not shown), each of which may include a series of operation instructions for the server. Further, the central processing units 422 may be configured to communicate with the storage media 430, and execute, on the server 400, a series of operation instructions stored in the storage media 430.

The server 400 may further include one or more power sources 426, one or more wired or wireless network interfaces 450, one or more input and output interfaces 458, one or more keyboards 456, and/or one or more operating systems 441, such as Windows Server™, Mac OS X™, Unix™, Linux™, FreeBSD™, and the like.

The server 400 may include a memory and one or more programs, where the one or more programs are stored in the memory and configured to be executed by one or more processors. The one or more programs include instructions that are configured to implement the blockchain-based data traffic calculations as described above.

A person skilled in the art may understand that all or part of the steps of the above embodiments may take the form of hardware implementation or the form of implementation of programs for instructing relevant hardware. The programs may be stored in a computer-readable storage medium. The storage medium may be a read-only memory, a magnetic disk, or an optical disk, etc.

Although the present disclosure has been described as above with reference to preferred embodiments, these embodiments are not constructed as limiting the present disclosure. Any modifications, equivalent replacements, and improvements made without departing from the spirit and principle of the present disclosure shall fall within the scope of the protection of the present disclosure.

## Claims

1. A method for blockchain-based data traffic calculation, the method being applied to a CDN system that includes at least one first node and one second node, wherein a blockchain wallet account corresponding to the first node is a first account, and a blockchain wallet account corresponding to the second node is a second account, and the method comprising:
when data traffic generated between the first node and the second node is detected, recording the data traffic generated by the first node or the second node by triggering a transfer between the first account and the second account;
acquiring account information of the first account and/or the second account, wherein the account information includes at least an account balance and/or a transfer record; and
calculating traffic information of the first node and/or the second node based on the account information of the first account and/or the second account.

2. The method according to claim 1, wherein recording the data traffic generated by the first node or the second node by triggering a transfer between the first account and the second account further includes:
converting the data traffic generated by the first node or the second node into a transfer amount based on a preset ratio, and triggering the transfer between the first account and the second account to be conducted according to the transfer amount.

3. The method according to claim 1, wherein recording the data traffic generated by the first node or the second node by triggering a transfer between the first account and the second account further includes:
after each preset time period, triggering a transfer between the first account and the second account to record data traffic generated by the first node or the second node in a latest preset time period.

4. The method according to claim 1, wherein recording the data traffic generated by the first node or the second node by triggering a transfer between the first account and the second account further includes:
when accumulated data traffic generated by the first node or the second node reaches a preset threshold, triggering a transfer between the first account and the second account to record accumulated data traffic currently generated by the first node or the second node, and clearing the currently generated accumulated data traffic.

5. The method according to claim 2, wherein calculating the traffic information of the first node and/or the second node based on the account information of the first account and/or the second account further includes:
converting the account balance of the first account or the second account into certain data traffic based on the preset ratio, and calculating the traffic information of the first node and/or the second node based on the converted data traffic; or
calculating data traffic corresponding to the transfer record of the first account or the second account based on the preset ratio, and calculating the traffic information of the first node and/or the second node based on the calculated data traffic.

6. A device for blockchain-based data traffic calculation, the device being applied to a CDN system that includes at least one first node and one second node, wherein a blockchain wallet account corresponding to the first node is a first account, and a blockchain wallet account corresponding to the second node is a second account, and the device comprising:
a triggering module that is configured to, when data traffic generated between the first node and the second node is detected, record the data traffic generated by the first node or the second node by triggering a transfer between the first account and the second account;
an acquisition module that is configured to acquire account information of the first account and/or the second account, wherein the account information includes at least an account balance and/or a transfer record; and
a calculation module that is configured to calculate traffic information of the first node and/or the second node based on the account information of the first account and/or the second account.

7. The device according to claim 6, wherein the triggering module is further configured to:
convert the data traffic generated by the first node or the second node into a transfer amount based on a preset ratio, and trigger the transfer between the first account and the second account to be conducted according to the transfer amount.

8. The device according to claim 6, wherein the triggering module is further configured to:
after each preset time period, trigger a transfer between the first account and the second account to record data traffic generated by the first node or the second node in a latest preset time period.

9. The device according to claim 6, wherein the triggering module is further configured to:
when accumulated data traffic generated by the first node or the second node reaches a preset threshold, trigger a transfer between the first account and the second account to record accumulated data traffic currently generated by the first node or the second node, and clear the currently generated accumulated data traffic.

10. The device according to claim 7, wherein the calculation module is further configured to:
convert the account balance of the first account or the second account into certain data traffic based on the preset ratio, and calculate the traffic information of the first node and/or the second node based on the converted data traffic; or
calculate data traffic corresponding to the transfer record of the first account or the second account based on the preset ratio, and calculate the traffic information of the first node and/or the second node based on the calculated data traffic.

11. A server, comprising a processor and a memory, wherein the memory stores at least one instruction, at least one program, a code set, or an instruction set, that is loaded and executed by the processor to implement the method for blockchain-based data traffic calculation according to any one of claims 1-5.

12. A computer-readable storage medium, the computer-readable storage medium storing at least one instruction, at least one program, a code set, or an instruction set, that is loaded and executed by the processor to implement the method for blockchain-based data traffic calculation according to any one of claims 1-5.
